# EUROPEAN PATENT APPLICATION

(11) **EP 4 296 473 A1**
(43) Date of publication of application: **27.12.2023**
(21) Application number: 23181053.2
(22) Date of filing: 22.06.2023
(51) Int. Cl.: F01D 11/24, F01D 25/14, F01D 25/26, F02C 7/18

(54) **AUGMENTED COOLING FOR BLADE TIP CLEARANCE OPTIMIZATION**

(30) Priority: 22.06.2022 US 202217808193
(71) Applicant: PRATT & WHITNEY CANADA CORP., Longueuil, Québec J4G 1A1 (CA)
(72) Inventor: GOVER, Christopher, (01BE5) Longueuil, J4G 1A1 (CA); SYNNOTT, Remy, (01BE5) Longueuil, J4G 1A1 (CA)
(74) Representative: Dehns

(57) **Abstract**

A turbine assembly (70) of an aircraft engine (10) includes a cooling system (50) for optimizing a tip clearance gap (27) defined between an inner surface (28) of a turbine housing (30) and blade tips (26) of the turbine blades (24). The cooling system (50) includes a cooling airflow passage (34) located radially outward from the turbine housing (30) and being in heat-transfer communication with the turbine housing (30). The cooling airflow passage (34) receives a flow of cooling air therethrough for cooling the turbine housing (34). A heat sink (80) is disposed on the outer surface (39) of the turbine housing (30) within the cooling airflow passage (34), the heat sink (80) including heat transfer elements projecting into the cooling airflow passage (34) away from the outer surface (29) of the turbine housing (30). The heat transfer elements are in convective heat transfer relationship with the flow of cooling air in the cooling airflow passage (34).

## Description

### TECHNICAL FIELD

The present invention relates generally to aircraft engines and, more particularly, to systems and methods for optimizing the tip clearance for rotors of such engines.

### BACKGROUND

Compressors and turbines of gas turbine engines comprise rotating turbomachinery having a plurality of rotor blades, including for example axial compressors, centrifugal compressors (i.e. impellers) and turbines. One source of inefficiency of such compressor rotors and/or turbine rotors is caused by tip leakage flow, whereby gas escapes through the radial tip clearance gap formed between the tips of the rotating rotor blades and the surrounding casing or shroud. Particularly within the hot section of the engine, the amount of thermal growth of the rotating components (e.g. turbine blades) and the static components (e.g. turbine housing) can differ, resulting in undesirable changes in the tip clearance between the turbine blades and the surrounding housing.

### SUMMARY

According to an aspect of the present invention, there is provided a turbine assembly in a turbine section of an aircraft engine, comprising: a turbine rotor including a hub and turbine blades extending outward from the hub to blade tips; a turbine housing circumferentially extending and radially surrounding the turbine rotor, the turbine housing having an inner surface facing the blade tips of the turbine blades, a distance between the inner surface of the turbine housing and the blade tips of the turbine blades defining a tip clearance gap; and a cooling system for optimizing the tip clearance gap, the cooling system including: a cooling airflow passage located radially outward from the turbine housing, the cooling airflow passage defined radially between an outer surface of the turbine housing and an inner surface of a casing, the casing surrounding the turbine housing within the aircraft engine and being radially spaced apart therefrom, the cooling airflow passage being in heat-transfer communication with the turbine housing and receiving a flow of cooling air therethrough for cooling the turbine housing; and a heat sink disposed on the outer surface of the turbine housing within the cooling airflow passage, the heat sink including heat transfer elements projecting into the cooling airflow passage away from the outer surface of the turbine housing, the heat transfer elements being in convective heat transfer relationship with the flow of cooling air in the cooling airflow passage.

The turbine assembly as defined above and described herein may also include any one or more of the following features, in whole or in part, and in any combination.

Optionally, and in accordance with any of the above, the cooling airflow passage is in air flow communication with a source of cooling air that provides non-core air drawn from outside a core of the aircraft engine.

Optionally, and in accordance with any of the above, the heat sink is disposed on the turbine housing adjacent to the blade tips of the turbine rotor.

Optionally, and in accordance with any of the above, the heat sink extends along an axial length that is greater than an axial distance between a leading edge and a trailing edge of the turbine blades of the turbine rotor.

Optionally, and in accordance with any of the above, a most upstream one of the heat transfer elements of the heat sink is located upstream of a leading edge of the turbine blades and a most downstream one of the heat transfer elements of the heat sink is located downstream of a trailing edge of the turbine blades.

Optionally, and in accordance with any of the above, a majority of the heat transfer elements of the heat sink are axially located between a leading edge of the turbine blades and a trailing edge of the turbine blades.

Optionally, and in accordance with any of the above, the heat transfer elements of the heat sink extend radially away from the outer surface of the turbine housing a distance that is more than half of a total radial gap of the cooling airflow passage, the total radial gap defined between the radially outer surface of the turbine housing and the radially inner surface of the casing.

Optionally, and in accordance with any of the above, the heat transfer elements of the heat sink include fins extending in a circumferentially direction about the turbine housing, the fins being axially spaced apart.

Optionally, and in accordance with any of the above, the heat transfer elements of the heat sink include fins extending in an axially direction along the turbine housing, the fins being circumferentially spaced part.

Optionally, and in accordance with any of the above, the heat transfer elements of the heat sink include a plurality of projections arranged to form an array of projections, the array of projections extends in both a circumferential direction and an axial direction.

Optionally, and in accordance with any of the above, the casing includes impingement apertures therein, the impingement apertures extending through the casing and opening into the cooling airflow passage at the radially inner surface of the casing, the impingement apertures directing impingement jets of additional cooling air onto the heat sink.

Optionally, and in accordance with any of the above, the impingement apertures use non-core air to produce the impingement jets, or alternately the additional cooling air for the impingement jets produced by the impingement apertures is non-core air.

Optionally, and in accordance with any of the above, the impingement apertures are axially located in the casing between a leading edge and a trailing edge of the turbine blades.

Optionally, and in accordance with any of the above, the impingement apertures are oriented at an angle through the casing, extending at least partially axially and/or circumferentially to impart a corresponding direction to the impingement jets of the additional cooling air.

Optionally, and in accordance with any of the above, the turbine rotor is a high pressure turbine rotor of a first turbine stage within the turbine section of the aircraft engine.

Optionally, and in accordance with any of the above, the heat sink is integrally formed with the turbine housing.

Optionally, and in accordance with any of the above, the cooling system is a passive cooling system that includes an inlet opening of the cooling airflow passage being located upstream of the turbine rotor and an exit opening of the cooling airflow passage being located downstream of the turbine rotor, the inlet opening providing air flow communication between a plenum receiving a cooling air and the cooling airflow passage, the exit opening located downstream of the turbine rotor and providing air flow communication between the cooling airflow passage and a main gaspath of the turbine section, the exit opening exposed to combustion gases flowing through the main gaspath past the exit opening to generate a local depression at the exit opening, the local depression defining a static pressure at the exit opening that is less than a static pressure of the cooling air at the inlet opening to induce the flow of the cooling air through the cooling airflow passage.

Optionally, and in accordance with any of the above, the cooling airflow passage includes a converging portion and a diverging portion in serial flow communication within the cooling airflow passage, the converging portion and the diverging portion are located at an axial location of the turbine housing adjacent the blade tips of the turbine blades to increase velocity of the cooling air flowing through the cooling airflow passage near the blade tips.

This aspect also extends to a turbine section comprising a turbine assembly described above or herein or as claimed in any of claims 1 to 13, and to an aircraft engine comprising such a turbine section.

According to another aspect of the present invention, there is provided a method of optimizing tip clearance between blades of a rotor in an aircraft engine and a housing surrounding the rotor, the method comprising: directing a flow of non-core cooling air through a cooling airflow passage located radially outward from the housing and outside a main gaspath directing combustion air through the blades of the rotor; and cooling the housing using a heat sink disposed within the cooling airflow passage, the heat sink including heat transfer elements projecting into the cooling airflow passage away from an outer surface of the housing, the heat transfer elements being in convective heat transfer relationship with the flow of non-core cooling air in the cooling airflow passage, the heat transfer elements located adjacent to blade tips of the rotor.

Optionally and in accordance with any of the above, the method as defined above and described herein may also include directing impingement jets of additional cooling air into the heat sink using impingement apertures extending through a casing of the aircraft engine surrounding the housing.

### BRIEF DESCRIPTION OF THE DRAWINGS

Reference is now made to the accompanying figures in which:
Fig. 1 is a schematic cross sectional view of an aircraft engine;
Fig. 2 is a schematic view of a turbine rotor of the turbine section of the aircraft engine of Fig. 1, showing the tip clearance;
Fig. 3 is a schematic partial cross-sectional view of the turbine section of the aircraft engine of Fig. 1;
Fig. 4 is an enlarged cross-sectional view take from region 4 in Fig. 3, showing a heat sink of the turbine housing;
Fig. 5 is an enlarged cross-sectional view of the turbine housing and heat sink of Fig. 4, with an additional impingement cooling flow directed on the heat sink;
Fig. 6 is an enlarged cross-sectional view of another turbine housing for the turbine section of Fig. 3, having an alternative heat sink; and
Fig. 7 is an enlarged cross-sectional view of another turbine housing for the turbine section of Fig. 3, having an alternative heat sink.

### DETAILED DESCRIPTION

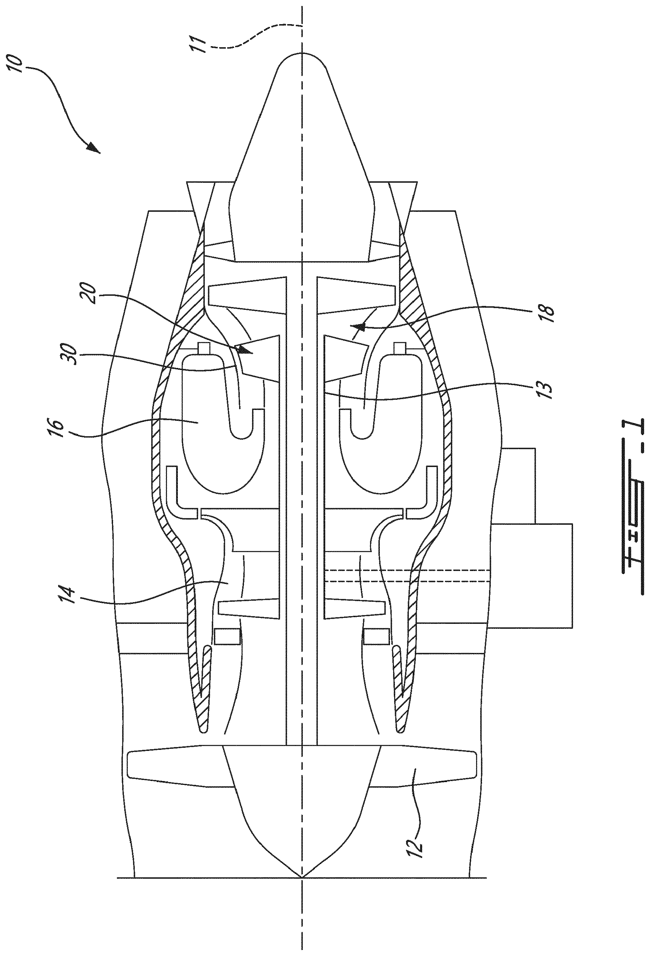

Fig. 1 illustrates an aircraft engine 10 (or simply "engine" 10), which in this embodiment is a turbofan gas turbine engine, of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases.

The turbine section 18 of the gas turbine engine 10 may be a multi-stage turbine, and thus may comprise several turbine rotors 20 which rotate about a central axis 11. Although the present disclosure will focus on systems/configurations and methods for optimizing the tip clearance between a turbine rotor 20 and its surrounding turbine housing 30, it is to be understood that the principles described herein may also be applied to corresponding components of other rotors within the engine 10, such as an axial or centrifugal compressor, or other rotating components.

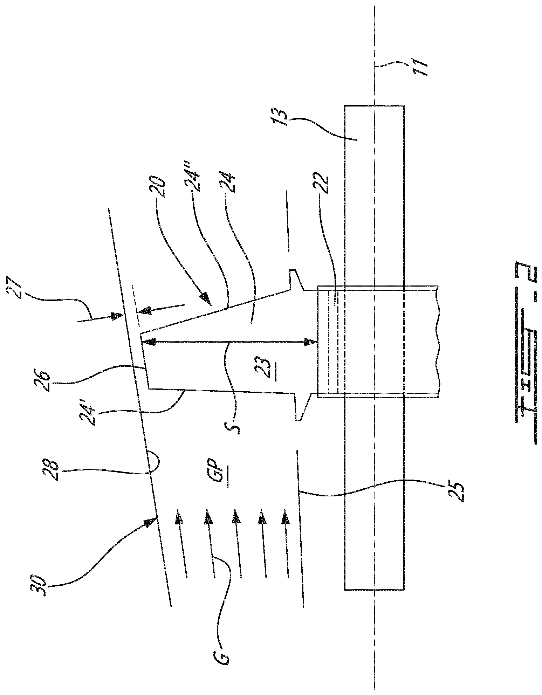

Referring to Fig. 2, an unshrouded turbine rotor 20 of the turbine section 18 is shown within a main gaspath GP of the turbine section 18, which is defined between a radially inner gaspath boundary 25 and a radially outer gaspath boundary 28, and has hot combustion gasses flowing in direction G therethrough. The radially outer gas path boundary in this embodiment is defined by inner surface 28 of the turbine housing 30. The turbine rotor 20 includes a plurality of turbine blades 24 which are circumferentially distributed about a hub 22, which is in turn mounted to an engine shaft 13 for rotation therewith. The turbine blades 24 extend outwardly from the hub 22, in direction away from the central axis 11, along a blade span S, to turbine blade tips 26 at their radially outer end. It is to be understood that the turbine blades 24 may extend in a generally radial direction, although they need not be perfectly radial relative to the central axis 11. As it well understood, each of the turbine blades 24 includes a leading edge 24' and a trailing edge 24", and a pressure side surface and a suction side surface of the airfoil 23 formed by the blade 24. The turbine blade tips 26 accordingly extend, in a generally axial and/or flow-wise direction, between the leading edge 24' and the trailing edge 24" of the blade 24, at the radially outermost remote tip of the airfoil 23.

The stationary outer turbine housing 30, which extends circumferentially and radially surrounds the rotor blades 24 of the turbine rotors 20, includes an inner surface 28 that faces and is exposed to the hot combustion gases flowing through the main gaspath GP, the inner surface 28 of the turbine housing 30 being proximate the blade tips 26 of the rotor blades 24. A distance or gap between this inner surface 28 of the turbine housing 30 and the radially-outermost surfaces of the blade tips 26 defines the blade tip clearance gap 27 (which may also be referred to herein as the blade tip clearance). This distance may, for example, be measured in a substantially radial direction, between the blade tips 26 and the inner surface 28 of the turbine housing 30.

During operation of the engine 10, significant thermal growth differential can occur between the turbine rotor 20, which is disposed in the hot combustion gas path GP of the turbine section 18, and the surrounding turbine housing 30. This thermal growth differential can cause changes in the blade tip clearance 27, which is defined as the gap between the outer tips 26 of the turbine blades 24 of the turbine rotor 20 and the inner surface 28 of the surrounding turbine housing 30 which is located radially outward from the turbine rotor 20. In certain embodiments, the blade tip clearance gap may be measured in a generally radial direction, although it is to be understood that this blade tip clearance gap between the tips 26 of the turbine blades 24 and the surrounding turbine housing 30 may have both axial and radial components, albeit with the radial component of the gap being greater than the axial component of the gap. These changes in the blade tip clearance 27 may occur due to differences in thermal expansion between the outer gas path surface (in this case the turbine housing 30) and the rotating blades 24 of the turbine rotor 20.

In use, each turbine rotor 20 rotates at high speed about the central axis 11, and is exposed to high temperatures of the combustion gases flowing in direction G within the main gaspath GP. Tip leakage through the blade tip clearance 27 can impair efficiency of the engine 10, because the turbine section 18 is not able to extract as much energy from the combustion gases as it could if no or less tip leakage occurred. When the blade tip clearance 27 increases, the efficiency of the engine 10 decreases as gas leakage around the tips 26 of the turbine blades 24 increases. Gas leakage at the blade tip has a direct impact on engine performance and the fuel efficiency. For example, in an exemplary embodiment, high pressure turbine blade tip clearance can be approximately 0.010" (0.025 cm) at the design point and a minimum high pressure turbine tip clearance can be 0.008" (0.020 cm) throughout the rest of the operating envelope. A turbine blade tip clearance increase of +0.010" (+0.025 cm) can be equivalent to approximately 1.2% efficiency decrease for the high pressure turbine. In off-design conditions (idling, low altitude etc.) the turbine tip clearance can increase by as much as +0.020" (+0.051 cm), resulting in efficiency losses of 2-3%. It is therefore desirable to be a able to optimize the blade tip clearance 27, in order to prevent and/or reduce the likelihood of the blade tip clearance 27 increasing during phases of flight during which such increase would be undesirable, such as during cruise for example.

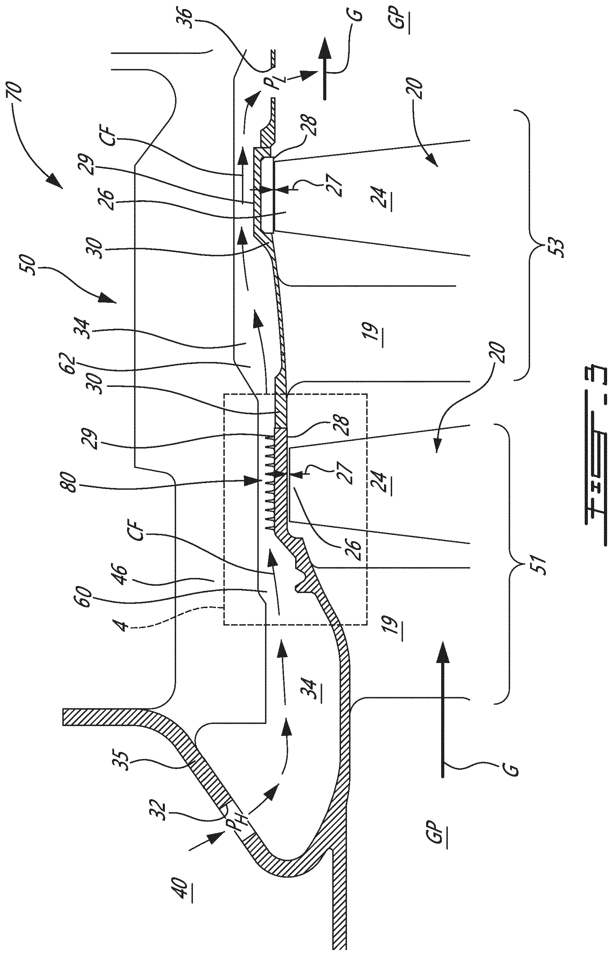

Referring now to Fig. 3, the turbine section 18 of the engine 10 includes a turbine assembly 70 that includes a cooling system 50, as will be described below, which is operable to optimize turbine blade tip clearance. The turbine assembly 70 includes a first turbine stage 51 and a second turbine stage 53, each of which includes a upstream turbine stator 19 which is stationary and a downstream turbine rotor 20 which rotates. In the embodiment shown, the turbine rotors 20 of the first and second turbine stages 51, 53 form part of the high-pressure turbine section of the engine 10, however it is to be understood that they could alternately be high and low pressure turbines, respectively, and thus connected to different shafts of the engine. As will be readily appreciated by those skilled in the art, the turbine stator 19 includes a plurality of stationary vanes which are circumferentially distributed about the annular gas path GP through which the hot combustion gases flow in direction G. As noted above, the turbine rotor 20 includes a plurality of turbine blades 24 which extend outwardly to turbine blade tips 26.

In one particular embodiment, the turbine blades 24 of the turbine rotor 20 may be replaceable, and as such are removably mounted to the hub 22 (see Fig. 2) of the turbine rotor 20 by known configurations. Alternately, the turbine rotor 20 described herein may be an integrally bladed rotor (IBR), whereby the rotor blades 24 and the hub 22 are integrally formed as a single, monolithic part, and in which case the individual blades 24 are not removable from the hub.

Referring still to Fig. 3, the turbine rotors 20 rotate within a surrounding, and circumferentially extending, turbine housing 30 which defines the radially outer gas path boundary. The blade tip clearance 27 is the gap between the outer tips 26 of the turbine blades 24 of the turbine rotors 20 and the inner surface 28 (facing towards and exposed to the hot gas path GP) of the turbine housing 30.

The cooling system 50 of Fig. 3 includes a cooling airflow passage 34 which is disposed radially outward from the turbine housing 30 and is therefore outside the main gas path GP. The cooling airflow passage 34 is in heat-transfer communication with the turbine housing 30, and more particularly it is in direct heat-transfer communication therewith whereby there are no intermediate components therebetween. Stated differently, the radially outer surface 29 of the turbine housing 30 at least partially defines the cooling airflow passage 34, and forms a radially inner boundary of the cooling airflow passage 34. Thus, turbine housing 30 at least partially defines the cooling airflow passage 34, and the radially outer surface 29 of the turbine housing 30 is directly exposed to the cooling airflow CF that flows through the cooling airflow passage 34. The radially inner surface 28 of the turbine housing, opposite from the radially outer surface 29, is directly exposed to the hot combustion gasses flowing through the main gaspath GP. Thus, uninterrupted conductive heat transfer occurs between the (cool) radially outer surface 29 of the turbine housing 30 and the (hot) radially inner surface 28 of the turbine housing 30.

The cooling airflow passage 34 extends generally annularly, although it may be circumferentially interrupted at one or more circumferential locations. Additionally, although the cooling airflow passage 34 will be referred to herein in the singular, it is to be understood that several distinct cooling airflow passages 34 may be provided, each extending, for example, about only a portion of the circumference of the turbine housing. Flow communication between the separate cooling airflow passages 34 may be permitted or, in another alternatively, each may be separately fed cooling air for flow therethrough.

As will be explained in further detail, this cooling airflow passage 34 receives a flow of cooling air CF therethrough, in a direction substantially corresponding to the direction of hot combustion gases G (e.g. from left to right in the image of Fig. 3), which acts to cool the radially outer surface 29 of the turbine housing 30. The cooling air CF is air which is not extracted from main gas path of the compressor section 14 of the engine 10, and therefore the performance penalty associated with the extraction of the cooling air CF is less than if the air used for cooling the turbine shroud would have been extracted, for example, from the high pressure main gas path within the compressor section 14 of the engine 10. Rather, in the depicted embodiment, the cooling air CF that flows through the cooling airflow passage 34 is drawn from a plenum 40 located outside the main gaspath GP of the engine. The cooling air within plenum 40 is relatively low speed (i.e. relative to the speed of air flowing within the main gaspath GP within either the compressor section 14 or the turbine section 18 of the engine 10) and/or is substantially stagnant air. Accordingly, this cooling air is low velocity and low temperature air that is directed into the plenum 40 from: air outside the core of the engine 10 (e.g. air within bypass duct of the engine 10); ambient air outside the engine 10 or outside a nacelle within which the engine is mounted when on the aircraft (which may for example be drawn off using a take-off port in an outer casing of the engine or in the nacelle); other air sources within the engine 10 outside the main gaspath GP; and/or other air sources inside or outside the core of the engine 10 provided that work has not been done on this air by the turbomachinery of the engine. The cooling air from the plenum 40 which is used for cooling as described herein may accordingly be referred to as "non-core" air.

The cooling air CF flowing through the cooling airflow passage 34 has a temperature that is lower than that of the hot combustion gases flowing through the main gaspath GP within the turbine section 18, and therefore the cooling air CF flowing through the cooling airflow passage 34 acts to cool the turbine housing 30 (and more specifically the outer surface 29 of the turbine housing 30, which thus cools the rest of the turbine housing 30). This, in turn, optimizes the blade tip clearance 27 by reducing or limiting the thermal growth differential between the turbine housing 30 and the turbine blades 24 during at least certain phases of engine operation and/or certain flight phases or conditions, such as but not limited to, take-off and cruise for example. It is however to be understood that in certain particular circumstances, such as during an in-flight re-light of the engine or during assembly or repair of a engine when it is therefore cold, it can be desirable to in fact maximize the tip clearance between the rotor blades and the surrounding housing such as to avoid unwanted rubbing or contact between the parts. The term "optimization" of the blade tip clearance 27 as used herein is therefore intended to mean any one or more of the following: limiting relative thermal growth differential between the blade tips and the surrounding housing during engine operation; reducing the blade tip clearance gap during engine operation; preventing increases in the blade tip clearance during engine operation; limiting increases in the blade tip clearance during engine operation; keeping the blade tip clearance within a predetermined range throughout one or more flight phases; and maintaining the blade tip clearance within a range of ± 5-10% of a design point tip clearance. Additionally, any of the preceding ways in which the present passive cooling system 50 is able to optimize the blade tip clearance 27, may further be true during one or more specific flight conditions or phases of operation of the engine, such as for example during steady state operation of the engine in flight (e.g. during cruise of the aircraft), during take-off of the aircraft, etc. The precise blade tip clearance 27 can vary during engine operation due to a number of factors, such as the mass flow and temperature of both the core air gaspath flow GP and the cooling air flow CF, the specific material properties of the housing and the rotor blades, the environmental operating conditions of the engine/aircraft, etc. Additionally, the temperatures and flow rates of the cooling air flow CF and the core air gaspath flow GP will vary during engine operation as a function of the operating point of the engine. Given all of this, the present cooling system 50 is operable to optimize the blade tip clearance 27 in a manner that can improve blade tip clearance about 25% relative to a blade tip clearance between comparable blades and housing that are not cooled by the cooling system 50 as described herein. This improvement may be, for example, due to a reduction in the amount of thermal growth of the housing relative to an amount of thermal growth of the rotating blades.

In certain embodiments, such as that depicted in Fig. 3 for example, the cooling system 50 is a passive cooling system, and thus the cooling of the turbine shroud 30 is an entirely passive process, in that cooling is performed by an induced flow of the cooling air CF through the cooling airflow passage 34 and does not require any active flow generation devices (e.g. fans or pumps, valves, etc.), nor any active monitoring or control of the blade tip clearance of the type required in existing active blade tip clearance systems. In other alternate embodiments, however, the cooling system 50 may include a fan or pump in order to at least partially assist the flow of the cooling air CF through the cooling airflow passage 34. This may be desirable during certain operating conditions, for example, when a pressure difference may not be sufficient to passively induce a sufficient quantity of cooling air through the cooling airflow passage 34. In such alternate embodiments, the cooling system 50 may therefore not be entirely passive.

The cooling airflow passage 34 is disposed radially outward of the main gaspath GP, and thus radially outward of the turbine housing 30 which defines the radially outer boundary of the main gaspath GP through the turbine section 18 of the engine 10. The cooling airflow passage 34 extends, outside the main gas path GP, between an inlet opening 32 defined in a plenum wall 35 and an exit opening 36 defined in the turbine housing 30 at a location downstream of the turbine rotor(s) 20. The flow of cooling air CF therefore flows through the cooling airflow passage 34, from the inlet opening 32 to the exit opening 36. The inlet opening 32 is located, in the present embodiment, upstream of the turbine stator 19 of the first turbine stage 51. The exit opening 36 is disposed, in the present embodiment, in the turbine shroud 30 at a location downstream from the downstream turbine rotor 20 of the second turbine stage 53. In the depicted embodiment, therefore, the cooling airflow passage 34 extends between the inlet opening 32 and the exit opening 36, along a complete axial extent of the first and second turbine stages 51, 53. It is however to be understood that the cooling airflow passage 34 may, in other embodiments, extend along only one turbine rotor and/or turbine stage, or alternately across more than two turbine rotors and/or turbine stages. In the embodiment of Fig. 3, both turbine rotors 20 (e.g. first and second turbine rotors) of the first and second turbine stages 51, 53 are therefore located axially between the inlet opening 32 and the exit opening 36 of the cooling airflow passage 34. Stated differently, the cooling airflow passage 34 is axially aligned with one or more turbine rotors 20 of the turbine stages, 51, 53, such that the turbine rotor 20 is axially located between the upstream inlet opening 32 and the downstream exit opening 36 of the cooling airflow passage 34, such that the cooling air CF flowing through the cooling airflow passage 34 acts to cool the turbine shroud 30 located radially outward of the tips 26 of the turbine rotor 20.

As noted above, low speed or substantially stagnant cool air within the plenum 40 is passively drawn through the inlet opening 32 and into the cooling airflow passage 34. Thus, the inlet opening 32 provides air flow communication between the cooling airflow passage 34 and the cooling airflow passage 34. The exit opening 36 provides air flow communication between the cooling airflow passage 34 and the main gaspath GP within the turbine section 18 at a location downstream of one or more of the turbine rotors 20.

The exit opening 36 accordingly allows for the cooling air CF flowing within the cooling airflow passage 34 to exit the cooling airflow passage 34 and to flow into the main gas path GP. Because this introduction of the relatively cooler cooling air CF occurs downstream of the rotor(s) 20, there is minimal negative impact on the performance of the turbine rotors 20 (e.g. with respect to extracting energy from the hot combustion gases produced by the combustor and flowing through the main gaspath GP).

The flow of cooling air CF is passively drawn through the cooling airflow passage 34, from the inlet opening 32 to the exit opening 36, due to a pressure differential generated between the exit opening 36 and the inlet opening 32. More particularly, the relatively high speed flow of hot combustion gases within the main gas path GP, flowing in direction G, causes a local depression (i.e. a local region of low pressure) at the exit opening 36 of the cooling airflow passage 34. This local depression at the exit opening 36 has a static pressure P_{L} that is less than a static pressure P_{H} at the inlet opening 32. Thus, the flow of cooling air CF will tend to flow through the cooling airflow passage 34 from the region of high pressure P_{H} (at the inlet opening 32) to the region of low pressure P_{L} (at the exit opening).

Although the inlet opening 32 and the exit opening 36 may be referred to herein in the singular, it is to be understood that each of the inlet opening 32 and the exit opening 36 may comprise a plurality of discrete apertures, slots, passages or other similar openings that permit air flow communication between the plenum 40 and the cooling airflow passage 34 (in the case of the inlet opening 32) and between the cooling airflow passage 34 and the main gaspath GP (in the case of the exit opening 36). For example, the inlet opening 32 may comprise a series of apertures that are spaced apart and circumferentially distributed about part or all of the circumference of the plenum wall 35 (which in this example may be annular). Thus, in this embodiment, the apertures form an annular array of apertures which feed the cooling air into the cooling airflow passage 34. The apertures may be holes, slots, arcuate openings, etc. Accordingly, in a particular configuration, the inlet opening 32 may comprise a number of discrete arcuate slots, each of which extends partly circumferentially and is circumferentially spaced apart from circumferentially adjacent arcuate slots. Alternately still, the inlet opening 32 may comprise an array of openings which are circumferentially, radially and/or axially spaced apart within the plenum wall 35. Similarly, and regardless of the configuration selected for the inlet opening 32, the exit opening 36 may comprise a series of holes that are spaced apart and circumferentially distributed about part or all of the circumference of the turbine housing 30. Alternately, the exit opening 36 may comprise a number of discrete arcuate slots, each of which extends partly circumferentially and is circumferentially spaced apart from circumferentially adjacent arcuate slots. Alternately still, the exit opening 36 may comprise an array of openings which are circumferentially, radially and/or axially spaced apart within the turbine housing 30.

In a particular configuration, the cooling airflow passage 34 of the cooling system 50 may be configured or otherwise formed such as to have a converging portion 60 and a diverging portion 62 (or indeed, more than one of each, such as to form several convergent-divergent nozzle portions 60, 62 in series), such that the cooling airflow CF flowing through these portions of the cooling airflow passage 34 is accelerated and decelerated, for example in order to provide a desired cooling air flow verity and/or pressure. More particularly, in a particular embodiment, the converging and diverging 60, 62 portions of the cooling airflow passage 34 are positioned such that the velocity of the cooling air CF within the cooling airflow passage 34 increases at one or more axial locations where the most heat is to removed (e.g. such as at axial locations of the turbine housing 30 adjacent the blade tips 26). Accordingly, the passive flow of cooling air CF through the cooling airflow passage 34 can be used most effectively to optimize the tip clearance gap 27 between the blade tips 26 and the turbine housing 30.

The present disclosure accordingly provides a cooling system 50 for optimizing the blade tip clearance 27 between the turbine blades 24 of a turbine rotor 20 and the surrounding turbine housing 30, and it does this by cooling the turbine housing 30 using passively induced and moved cooling air which cools the turbine housing 30 outside the main gaspath GP, and which cooling air is not extracted from the compressor section 14 of the engine. The flow of the high-speed gas past the holes results in a lower static pressure at the location of the holes which promotes flow through the air passage, cooling the housing and reducing the thermal growth of the housing and the resulting impact on the tip clearance. The cooling airflow CF within the cooing airflow passage 34 can additionally cool the surrounding casing(s) 46, which may form at least part of an outer boundary of the cooling airflow passage 34. By simultaneously cooling the surrounding casing(s) 46, overall material properties of the turbine assembly may be improved (e.g. for containment capability).

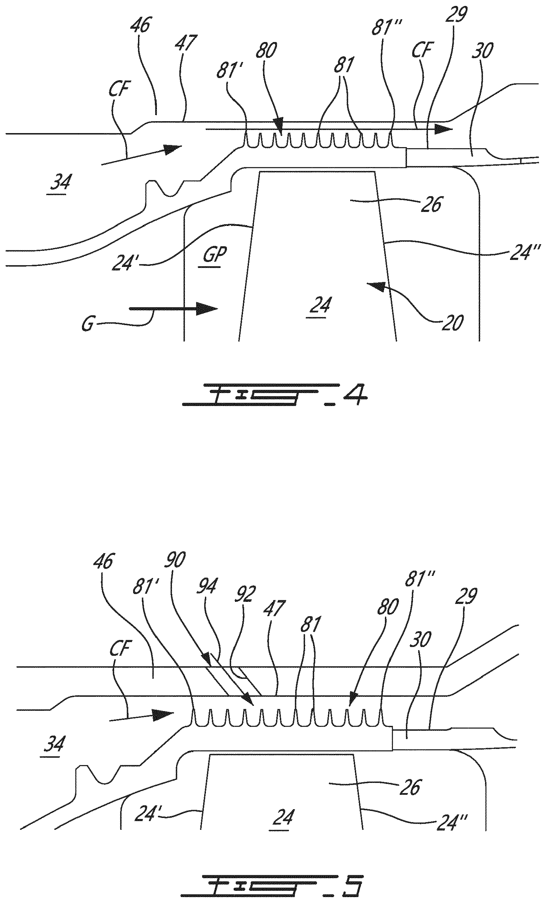

Referring now to Figs. 3 and 4, the turbine housing 30 of the present disclosure also includes one or more heat sinks 80 thereon, as will be described in further detail below.

The heat sink 80 provides improved convective heat transfer between the turbine housing 30 and the flow of cooling air CF flowing through the cooling airflow passage 34, and therefore enables more efficient cooling of the turbine housing 30. More particularly, the heat sink 80 causes greater heat transfer from the hot turbine housing 30 to the cooling air CF flowing through the cooling airflow passage 34 than would otherwise occur if the heat sink 80 was not present.

In the embodiment of Fig. 3, the heat sink 80 is mounted on the turbine housing 30 adjacent to, radially opposite of, the blade tips 26 of the turbine rotor 20 of the first (or high pressure) turbine stage 51, or stated differently the heat sink 80 is axially aligned with the rotor 20 of the first turbine stage 51. Although in the embodiment of Fig. 3 a second heat sink 80 is not present adjacent the turbine rotor 20 of the second turbine stage 53, in certain alternate embodiments, two or more heat sinks 80 may be present as part of the cooling system 50. For example, in a particular embodiment, multiple heat sinks 80 may be provided within the cooling airflow passage 34, each one being positioned at an axial position substantially corresponding to the axial positions the rotors 20, such as to maximize heat transfer between these regions of the turbine housing 30 and thus optimize the blade tip clearance 27 between the blade tips 26 of the rotors and the surrounding turbine housing 30.

The heat sink 80 may, in certain embodiments, be integrally formed with the turbine housing 30. For example, the heat sink 80 may be integrally formed with a remainder of the turbine housing 30 by one of casting, turning, milling, 3D printing or other suitable machining or manufacturing operations. In other embodiments, the heat sink 80 may be separately formed and suitable fixed in place on the radially outer surface 29 of the turbine housing 30 in a manner that will maximize the conductive heat transfer between the body of the turbine housing 30 and the heat sink 80 mounted thereto.

Referring more specifically to Fig. 4, the heat sink 80 includes multiple heat transfer elements 81, such as fins, pins or the like, that project away from the outer surface 29 of the turbine housing 30 and into the cooling airflow passage 34. As such, the cooling air CF that flows through the cooling airflow passage 34 flows over, around and/or through the projecting heat transfer elements 81. In the depicted embodiment of Fig. 4, the heat sink 80 includes multiple upstanding fins 81, each of which is elongated and projects upwardly (e.g. radially outwardly) from the turbine housing 30. In the embodiment of Fig. 4, a plurality of fins 81 are arranged proximate to each other. Each of the fins 81 extends in a circumferential direction, and may therefor extend either partially circumferentially or fully circumferentially about the annular turbine housing 30. The circumferentially-extending fins 81 are axially spaced apart from each other in the direction of the cooling airflow CF, to thereby define a plurality of troughs or circumferential grooves between each pair of adjacent fins 81. The heat sink 80 of Fig. 4 therefore comprises an array of fins 81 which form the heat sink 80.

As the embodiment of Fig. 4, the heat sink 80 extends along an axial length that is greater than an axial distance between the leading edge 24' and the trailing edge 24" of the blade 24, measured at the blade tips 26 (i.e. the radially outermost remote tips of the blade 24). Accordingly, at least the most upstream fin 81' of the array of fins 81 is located upstream of the leading edge 24' of the blade 24 and the most downstream fin 81" of the array of fins 81 is located downstream of the trailing edge 24" of the blade 24. Further, at least a majority of the number of fins 81 in the array of fins 81 making up the heat sink 80 are axially disposed between the leading edge 24' and the trailing edge 24" of the blade 24.

Referring still to Fig. 4, the fins 81 that form the heat sink 80 extend radially away from the outer surface 29 of the turbine housing a distance that is, in the depicted embodiment, more than half of a total radial gap of the cooling airflow passage 34, measured between the radially outer surface 29 of the turbine housing 30 and the radially inner surface 47 of the surrounding casing 46, at least within the region of the cooling airflow passage 34 that contains the heat sink 80. Accordingly, in this embodiment, the projecting fins 81 of the heat sink 80 extend through at least a substantial portion of the cooling airflow passage 34, in order to maximize the heat transfer possible between the heat sink 80 of the turbine housing 30 and the cooling airflow CF flowing through the cooling airflow passage 34.

Although the fins 81 of the heat sink 80 are depicted in Fig. 4 as being identical and as projecting the same radial distance into the cooling airflow passage 34, it is to be understood that the fins 81 of the heat sink 80 may be non-uniform. Accordingly, the heat sink 80 may be composed of multiple fins 81 that have different sizes, shapes, spacing, radial length, axial thickness, etc. Additionally, although the spacing between adjacent fins 81 in the embodiment of Fig. 4 is substantially equal, the spacing between the fins 81 may alternately vary throughout the heat sink 80 - i.e. the axial spacing between the fins 81 of the heat sink 80 may be non-constant. In this embodiment, therefore the axial spacing between the fins 81 may be non-constant. Additionally, some of the fins 81 may be fully circumferentially, whereas others of the fins 81 within the same heat sink 80 may extend only partially circumferentially (and thus may be circumferentially discontinuous). Of course, it is also possible for all of the fins 81 to be either circumferentially continuous, whereby all of the fins 81 extend about the full circumference of turbine housing 30, or for all of the fins 81 to be circumferentially discontinuous, whereby each of the fins 81 extend only along a partial circumference.

Referring now to Fig. 5, in certain embodiments the casing 46 that surrounds the turbine housing 30 may also include additional cooling flow features 90 therein. The additional cooling flow features 90 include, in one particular embodiment, one or more impingement apertures 92 that extend through the casing 46 and open into the cooling airflow passage 34 at the radially inner surface 47 of the casing 46. The impingement apertures 92 are operable to direct one or more impingement jets 94 of cooling air directly onto the heat sink 80, such as to further maximize convective heat transfer away from turbine housing 30 via the heat sink 80. In the depicted embodiment, a plurality of the impingement apertures 92 are provided in the casing 46 and circumferentially spaced apart about a portion or an entirely of the circumference of the casing 46 such as to form a circumferentially-extending row of impingement apertures 92 in the casing 46. The additional cooling air directed through the impingement apertures 92 may be obtained from the same source of non-core air as that which is provided to the plenum 40, or may be obtained from a different source of air that is sufficiently cool to reduce the temperature of the hot turbine casing 30 and thus the heat sink 80 thereon. In a particular embodiment, this different source of air may also provide non-core air, as defined above, which has not been extracted from the compressor of the engine 10. For example, this may be cool air extracted from outside the core of the engine 10, such as from a bypass duct or from outside the engine and/or outside a nacelle within which the engine is mounted when on an aircraft.

The impingement apertures 92 are sized such as to generate an impingement air jet, as will be understood by those skilled in the art. For greater certainty, and as well understood in the art, the relative sizing, spacing and/or density of impingement cooling holes differs from, for example, those of effusion cooling holes or other types of holes used to direct airflow in gas turbine engines.

In at least the embodiment of Fig. 5, the impingement apertures 92 extending through the casing 46 are axially located to be aligned with the heat sink 80, and are therefore axially located between the most upstream fin 81' of heat sink 80 and the most downstream fin 81" thereof. In a particular embodiment, the impingement apertures 92 are also all axially located between the leading edge 24' of the blade 24 and the trailing edge 24" of the blade 24.

As seen in Fig. 5, each of the impingement apertures 92 of the additional cooling flow features 90 may extend at an angle through the casing 46, such as to direct the impingement jets 94 of cooling air at an angle onto the surfaces of the heat sink 80. More particularly, the impingement apertures may extend at least partially axially and/or at least partially circumferential, such as impart corresponding axial and/or circumferential components to the direction of the impingement jets 94. For example, the impingement apertures 92 may be circumferentially inclined such as to impart a swirling flow of additional cooling air generated by the impingement jets 94. Regardless of their angular orientation or size, once the impingement jets 94 of the additional cooling air flow directed by the impingement apertures 92 have impinged upon the surfaces of the heat sink 80, this additional cooling air will mix with the rest of the cooling airflow CF within the cooling airflow passage 34 and flow downstream from the heat sink 80 within the cooling airflow passage for subsequent discharge into the main gaspath.

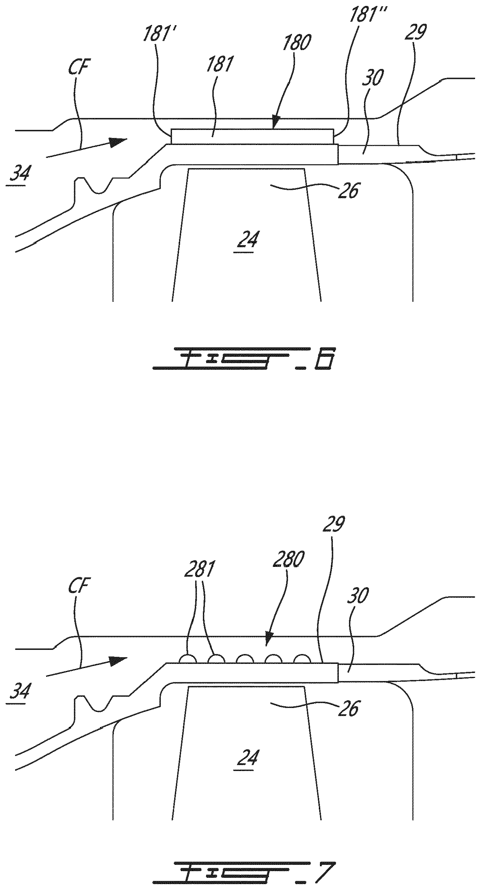

Referring now to the embodiment of Fig. 6, an alternate heat sink 180 includes a plurality of axially-extending fins 181. The axially-extending fins 181 of the heat sink 180 extend from an upstream fin end 181' to a downstream fin end 181", and are circumferentially spaced apart to form a circumferential array of fins 181.

The fins 181 and the heat sink 180 otherwise function as per the fins 81 of the heat sink 80 as described above, and thus may have similar properties. The characteristics of the fins 81 and/or the heat sink 80 as described above therefore similarly apply to the fins 181 and/or the heat sink 180 of Fig. 6, with the exception that each of the fins 181 extends axially along the complete length of the heat sink 180 (i.e. between the upstream fin end 181' and a downstream fin end 181") and is circumferentially spaced apart from the next adjacent fin 181.

In yet another embodiment, the heat sink 80 or the heat sink 180 may be modified such that the fins 81, 181 thereof are at least partially helical in shape, thereby forming a spiral-shaped set of fins for the heat sink. For example, the axially-extending fins 181 of the heat sink 180 may each extend helically, whereby the downstream fin end 181" is located at a different circumferential position on the turbine housing than the upstream fin end 181'. Similarly, the circumferentially extending fins 81 of the heat sink 80 may form an interrupted or uninterrupted helical fin that extends axially as it extends circumferentially about the turbine housing. In this alternatively, therefore, the helical fin(s) 81 of the heat sink 80 may form a screw-like fin.

Referring now to the embodiment of Fig. 7, an alternate heat sink 280 includes a plurality of projections 281 that extend into the cooling airflow passage 34. The projections 281 may comprise, for example, bumps or pins that extend into the cooling air flow CF. A plurality of these individual projections 281 may be provided and arranged to form an array of projections 281. More particularly, the array of projections 281 may extend in both the circumferential direction and the axial direction, whereby several axially spaced apart rows of projections 281 are provided, with each row being formed by a plurality of circumferentially spaced apart projections 281. Although rounded bumps 281 are depicted in Fig. 7 as forming the heat sink 280, it is to be understood that pins or alternately shaped features can be similarly employed.

The projections 281 of the heat sink 280 otherwise function as per the fins 81 of the heat sink 80 as described above, and may thus have similar properties. The characteristics of the fins 81 and/or the heat sink 80 as described above therefore similarly apply to the projections 281 and/or the heat sink 280 of Fig. 7, with the exception that each of the projections 281 is substantially discontinuous and thus a plurality of the projections 281 are arranged to form an array of the projections that extends in both the axial and the circumferential direction on the outer surface 29 of the turbine housing 30. Each of the individual projections 281 is therefore both circumferentially and axially spaced apart from a next adjacent projection 281 within the array of projections 281 that form the heat sink 280.

It is also to be understood that the projections 281 of the heat sink 280 may comprise "trip strips", "stand-offs" or other suitable types of flow disruptions which will increase the convective heat transfer from the turbine housing 30 and the cooling air CF flowing through the cooling airflow passage 34.

Regardless of the specific configuration used, the heat sinks 80, 180, 280 all act to increase the surface area of the turbine housing 30 that is exposed to the cooling air CF within the cooling airflow passage 34, and thus increase convective heat transfer between the turbine housing 30 and the cooling air CF to thereby increase the amount of heat extracted from the turbine housing 30. This is done, as explained above, in order to optimize the blade tip clearance 27 by reducing or limiting the thermal growth differential between the turbine housing 30 and the turbine blades 24 during at least certain phases of engine operation and/or certain flight phases or conditions

In use, the present disclosure also provides a method of optimizing the tip clearance 27 between blades 24 of the rotor 20 and the surrounding housing 30 of the engine 10. The method includes directing a flow of non-core cooling air through the cooling airflow passage 34 located radially outward from the housing 30 and outside a main gaspath GP directing combustion air through the blades 24 of the rotor 20, and cooling the housing 30 using the heat sink 80, 180, 280 disposed within the cooling airflow passage 34. The heat sink 80, 180, 280 includes heat transfer elements 81, 181, 281 that project into the cooling airflow passage 34 away from an outer surface of the housing 30. The heat transfer elements 81, 181, 281 are in convective heat transfer relationship with the flow of non-core cooling air in the cooling airflow passage 34, and are located adjacent to blade tips 26 of the blades 24 of the rotor 20.

Additionally, the method may include directing impingement jets of additional cooling air into the heat sink using impingement apertures extending through a casing of the aircraft engine surrounding the housing.

In certain embodiments, directing the flow of cooling air through the cooling air passage may include passively inducing the flow through the cooling air passage due to a pressure differential between an inlet opening of the cooling airflow passage defining a first static pressure and an exit opening of the cooling airflow passage defining a second static pressure. The inlet opening provides air flow communication from a source of cooling air into the cooling airflow passage, the exit opening providing air flow communication from the cooling airflow passage into the main gaspath downstream of the rotor. The source of cooling air providing non-core air at lower speed and a lower temperature than the combustion gas flowing through the main gaspath, the second static pressure being lower than the first static pressure due to the combustion airflow being of a higher speed than the non-core air of the source of cooling air.

It should be noted that the terms "upstream" and "downstream" used herein referto the direction of an gas flow passing through the main annular gaspath of the gas turbine engine 10. It should also be noted that the term "axial", "radial", "angular" and "circumferential" are used with respect to a central axis 11 of the gas turbine engine 10. It should also be noted that expressions such as "extending radially" as used herein does not necessarily imply extending perfectly radially along a ray perfectly perpendicular to the central axis 11, but is intended to encompass a direction of extension that has a radial component relative to the central axis 11.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, although a turbofan engine is depicted in Fig. 1 and described herein, it will be understood that the aircraft engine 10 of the present disclosure may comprise other types of gas turbine engines such as turboshafts, turboprops, auxiliary power units, etc., as well as hybrid aircraft engines (e.g. hybrid electric engines). Additionally, although the exemplary embodiments described above focus on tip clearance optimization between the blades 24 of a turbine rotor 20 and its surrounding turbine housing 30, it is to be understood that the principles described herein may also be applied to corresponding components of other rotors within the engine 10, such as an axial or centrifugal compressor, or other rotating components. Accordingly, in such an alternative embodiment, the rotors described herein are compressor rotors and the housing surrounding the rotors is a compressor housing, with the blade tip clearance between the blades of the compressor rotor and the compressor housing being optimized in the manner described herein. Yet further modifications could be implemented by a person of ordinary skill in the art in view of the present disclosure, which modifications would be within the scope of the present technology.

## Claims

1. A turbine assembly (70) in a turbine section (18) of an aircraft engine (10), the turbine assembly (70) comprising:
a turbine rotor (20) including a hub (22) and turbine blades (24) extending outward from the hub (22) to blade tips (26);
a turbine housing (30) circumferentially extending and radially surrounding the turbine rotor (20), the turbine housing (30) having an inner surface (28) facing the blade tips (26) of the turbine blades (24), a distance between the inner surface of the turbine housing (28) and the blade tips (26) of the turbine blades (24) defining a tip clearance gap (27); and
a cooling system (50) for optimizing the tip clearance gap (27), the cooling system (50) including:
a cooling airflow passage (34) located radially outward from the turbine housing (30), the cooling airflow passage (34) defined radially between an outer surface (29) of the turbine housing (30) and an inner surface (47) of a casing (46), the casing (46) surrounding the turbine housing (30) within the aircraft engine (10) and being radially spaced apart therefrom, the cooling airflow passage (34) being in heat-transfer communication with the turbine housing (30) and receiving a flow of cooling air (CF) therethrough for cooling the turbine housing (30); and
a heat sink (80) disposed on the outer surface (29) of the turbine housing (30) within the cooling airflow passage (34), the heat sink (80, 180, 280) including heat transfer elements (81, 181, 281) projecting into the cooling airflow passage (34) away from the outer surface (29) of the turbine housing (30), the heat transfer elements (81, 181, 281) being in convective heat transfer relationship with the flow of cooling air (CF) in the cooling airflow passage (34).

2. The turbine assembly (70) as defined in claim 1, wherein the cooling airflow passage (34) is in air flow communication with a source (40) of cooling air that provides non-core air drawn from outside a core of the aircraft engine (10).

3. The turbine assembly (70) as defined in claim 1 or 2, wherein the heat sink (80, 180, 280) is disposed on the turbine housing (30) adjacent to the blade tips (26) of the turbine rotor (20), and optionally wherein the heat sink (80; 180; 280) extends along an axial length that is greater than an axial distance between a leading edge (24') and a trailing edge (24") of the turbine blades (24) of the turbine rotor (20).

4. The turbine assembly (70) as defined in any preceding claim, wherein a most upstream one of the heat transfer elements (81'; 181'; 281') of the heat sink (80; 180; 280) is located upstream of a leading edge (24') of the turbine blades (24) and a most downstream one of the heat transfer elements (81"; 181"; 281") of the heat sink (80; 180; 280) is located downstream of a trailing edge (24") of the turbine blades (24).

5. The turbine assembly (70) as defined in any preceding claim, wherein a majority of the heat transfer elements (81; 181; 281) of the heat sink (80; 180; 280) are axially located between a leading edge (24') of the turbine blades (24) and a trailing edge (24") of the turbine blades (24).

6. The turbine assembly (70) as defined in any preceding claim, wherein the heat transfer elements (81; 181; 281) of the heat sink (80; 180; 280) extend radially away from the outer surface (29) of the turbine housing (30) a distance that is more than half of a total radial gap of the cooling airflow passage (34), the total radial gap defined between the radially outer surface (29) of the turbine housing (30) and the radially inner surface (47) of the casing (46).

7. The turbine assembly (70) as defined in any preceding claim, wherein the heat transfer elements (81) of the heat sink (80) include fins (81) extending in a circumferential direction about the turbine housing (30), the fins (81) being axially spaced apart.

8. The turbine assembly (70) as defined in any preceding claim, wherein the heat transfer elements (181) of the heat sink (180) include fins (181) extending in an axial direction along the turbine housing (30), the fins (181) being circumferentially spaced apart.

9. The turbine assembly (70) as defined in any preceding claim, wherein the heat transfer elements (81; 181; 281) of the heat sink (80; 180; 280) include a plurality of projections (81; 181; 281) arranged to form an array of projections (81; 181; 281), the array of projections (81; 181; 281) extends in both a circumferential direction and an axial direction.

10. The turbine assembly (70) as defined in any preceding claim, wherein the casing (46) includes impingement apertures (92) therein, the impingement apertures (92) extending through the casing (46) and opening into the cooling airflow passage (34) at the radially inner surface (47) of the casing (46), the impingement apertures (92) directing impingement jets (94) of additional cooling air onto the heat sink (80, 180, 280), and optionally wherein the impingement apertures (92):
use non-core air to produce the impingement jets (94);
are axially located in the casing (46) between a leading edge (24') and a trailing edge of the turbine blades (24"); or
are oriented at an angle through the casing (46), extending at least partially axially and/or circumferentially to impart a corresponding direction to the impingement jets (94) of the additional cooling air.

11. The turbine assembly (70) as defined in any preceding claim, wherein the turbine rotor (20) is a high pressure turbine rotor (20) of a first turbine stage (51) within the turbine section (18) of the aircraft engine (10) and/or the heat sink (80; 180; 280) is integrally formed with the turbine housing (30).

12. The turbine assembly (70) as defined in any preceding claim, wherein the cooling system (50) is a passive cooling system (50) that includes an inlet opening (32) of the cooling airflow passage (34) being located upstream of the turbine rotor (20) and an exit opening (36) of the cooling airflow passage (34) being located downstream of the turbine rotor (20), the inlet opening (32) providing air flow communication between a plenum (40) receiving a cooling air and the cooling airflow passage (34), the exit opening (36) located downstream of the turbine rotor (20) and providing air flow communication between the cooling airflow passage (34) and a main gaspath (GP) of the turbine section (18), the exit opening (36) exposed to combustion gases flowing through the main gaspath (GP) past the exit opening (36) to generate a local depression (P_{L}) at the exit opening (36), the local depression (P_{L}) defining a static pressure (P_{L}) at the exit opening (36) that is less than a static pressure (P_{H}) of the cooling air at the inlet opening (32) to induce the flow of the cooling air through the cooling airflow passage (34).

13. The turbine assembly (70) as defined in any preceding claim, wherein the cooling airflow passage (34) includes a converging portion (60) and a diverging portion (62) in serial flow communication within the cooling airflow passage (34), the converging portion (60) and the diverging portion (62) are located at an axial location of the turbine housing (30) adjacent the blade tips (26) of the turbine blades (24) to increase velocity of the cooling air flowing through the cooling airflow passage (34) near the blade tips (26).

14. A method of optimizing tip clearance (27) between blades (24) of a rotor (20) in an aircraft engine (10) and a housing (30) surrounding the rotor (20), the method comprising:
directing a flow of non-core cooling air through a cooling airflow passage located radially outward from the housing (30) and outside a main gaspath (GP) directing combustion air through the blades (24) of the rotor (20); and
cooling the housing (30) using a heat sink (80, 180, 280) disposed within the cooling airflow passage (34), the heat sink (80, 180, 280) including heat transfer elements (81, 181, 281) projecting into the cooling airflow passage (34) away from an outer surface (29) of the housing (30), the heat transfer elements (81, 181, 281) being in convective heat transfer relationship with the flow of non-core cooling air in the cooling airflow passage, the heat transfer elements (81, 181, 281) located adjacent to blade tips (26) of the rotor (20).

15. The method of claim 14, further comprising directing impingement jets (94) of additional cooling air into the heat sink (80, 180, 280) using impingement apertures (90) extending through a casing (30) of the aircraft engine (10) surrounding the housing (30).
